# EUROPEAN PATENT APPLICATION

(11) **EP 2 040 470 A1**
(43) Date of publication of application: **25.03.2009**
(21) Application number: 07380256.3
(22) Date of filing: 20.09.2007
(51) Int. Cl.: H04N 7/10

(54) **Programmable active distributor for a TV headend**

(71) Applicant: FAGOR, S.COOP., 20500 Mondragon (Gipuzkoa) (ES)
(72) Inventor: Isasi, Zamalloa, Ricardo, 48200 Durango (Bizkaia) (ES)
(74) Representative: Igartua, Ismael

(57) **Abstract**

Programmable active distributor for a TV headend, the headend (200) comprising an input (202) that receives an input signal (20) that comprises a plurality of channels, an output (203) for distributing at least one of the channels of the input signal (20), at an adjusted output level, and at least one amplification unit (201) that is disposed between the input (202) and the output (203) and which applies a gain to a channel in order to adjust its output level. The headend (200) comprises as many units (201) as channels to be distributed, each unit adjusting (201) the output level of a corresponding channel. The distributor (100) is disposed between the input (202) and the units (201), receiving the input signal (20) and comprising at least one output (30) for distributing at least one of said channels to the units (201).

## Description

### TECHNICAL FIELD

The present invention relates to TV headends that receive at least one input signal with a plurality of channels in order to distribute said channels to TVs at homes, and more specifically to headends that may distribute said channels at substantially constant output levels, thereby compensating for any possible variations in said input signal (in its level, in the amount of signal) at the input of said headend.

The present invention also relates to a procedure in a headend for the distribution of the channels of an input signal at a substantially constant output level.

### PRIOR ART

There are known TV systems that comprise a TV headend adapted in order to receive at least one signal from an aerial, with a plurality of channels at different frequencies, and in order to distribute the channels to users, with a specific frequency band corresponding to each channel.

The headends comprise an amplification unit connected to each channel to be distributed, a required output level in said channels being obtained by means of adjusting the gain of the corresponding amplification units, the gain associated to each channel being adjusted regardless of the adjacent channels.

Headends that comprise amplification units with automatic gain control (AGC) for such a purpose are known, the gain of each amplification unit being adjusted automatically so that the output levels of the corresponding channels may be adjusted when the input levels fluctuate or undergo variations in the input of the headend.

Headends that comprise amplification units for adjusting the output level of the channels, but which are not provided with automatic gain control, are also known. Thus, when said headend is installed, the installation engineer adjusts the gain connected to each channel in order to obtain the required output levels, but the gain remains constant at all times, as a result of which the variations in the input level of each channel caused by the broadcast conditions, for example, are transmitted entirely to the output, potentially leading to a deterioration in the quality of the service (in channels distributed to homes).

With the introduction of digital technologies many current TV systems have become obsolete, as the headends are not adapted in order to receive and/or distribute signals in a digital environment. Thus, the deterioration suffered by output levels in the analogue environment in headends with amplification units that do not automatically maintain the output levels of the channels may result in the loss of the entire signal in a digital environment, a phenomenon commonly known as the "wall effect".

One solution is to replace amplification units that do not have automatic gain control with others that do, such as the amplifier disclosed in EP 1653609 A1, for example. In this particular case each and every one of the amplification units have to be replaced, which may prove to be both expensive and time-consuming.

### DISCLOSURE OF THE INVENTION

It is an object of the invention to provide a distributor for a headend that is adapted for distributing TV channels at substantially constant output levels, both for analogue and digital environments.

The programmable active distributor of the invention is used in a TV headend, which may receive an input signal with a plurality of channels at different frequencies through a headend input, and which may distribute to homes, through a headend output, at least one of the channels at a substantially constant output level, said channel being capable of being both analogue and digital. Said headend also comprises an amplification unit for each channel to be distributed at a substantially constant output level, said amplification units being disposed between the headend input and output, and said amplification units being capable of applying a gain to the corresponding channel in order to amplify its level.

The distributor of the invention is disposed between the headend input and the amplification units, and receives the input signal with the plurality of channels from the headend input. Said distributor comprises at least one distributor output to distribute at least one of said channels to the amplification units, each channel corresponding with a specific amplification unit.

The distributor also comprises control means that may select at least one of the channels of the input signal received, which may determine the input level of said selected channels, and which may adjust the level of said selected channels in order to distribute them through the distributor outputs at a substantially constant output level. The distributor automatically adjusts, therefore, the level of the channels, distributing said channels to the corresponding amplification units at a substantially constant output level.

The distributor comprises a distributor output for each selected channel, the control means associating a selected channel to each distributor output, and each distributor output being linked to an amplification unit.

In this way, instead of replacing each one of the amplification units adapted for working in only analogue environments with others adapted for also working in a digital environment (those comprising automatic gain control), it is sufficient to add the inventive distributor to the headend comprising said amplification units.

It is another object of the invention to provide a procedure for the distribution of an input signal in a TV headend distributor.

These and other advantages and characteristics of the invention will be made evident in the light of the drawings and the detailed description thereof.

### DESCRIPTION OF THE DRAWINGS

FIG. 1 schematically shows an embodiment of the distributor of the invention, disposed in a TV headend.
FIG. 2 schematically shows the distributor of FIG. 1.
FIG. 3 shows a flow diagram of an embodiment of the procedure of the invention.

### DETAILED DISCLOSURE OF THE INVENTION

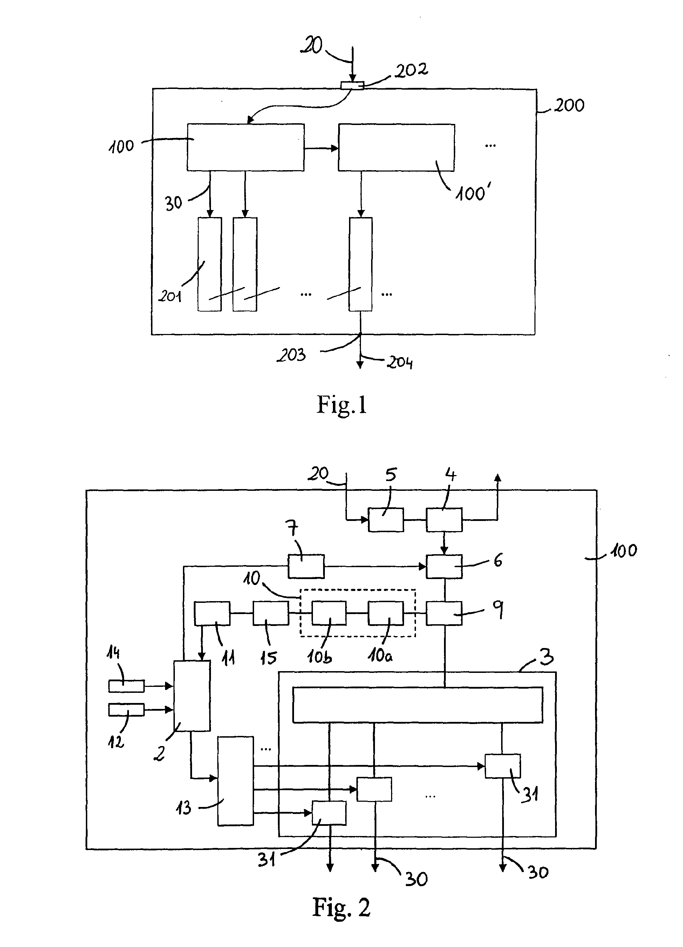

Figure 1 shows an embodiment of the programmable active distributor 100 of the invention, which is designed for use in a TV headend 200. Said headend 200 may receive an input signal 20 from a TV aerial (not shown in the figures) through a headend input 202, the input signal 20 comprising a plurality of channels at different frequencies by means of which are transmitted video/audio signals that are later sent to TVs at homes. After passing through the interior of the headend 200 and being treated in said headend 200, the channels are distributed to homes through a headend output 203 by means of an output signal 204, said channels comprising a substantially constant output level in said headend output 203, regardless of the variations in the input level of said channels in the headend input 202.

To ensure that the output levels of the channels distributed to homes are sufficiently high, the headend 200 also comprises a channel amplification unit 201 for each channel to be distributed through the headend output 203 disposed between the headend input 202 and said headend output 203, each amplification unit 201 applying a specific gain to its corresponding channel in order to adjust its output level and thereby obtain a required output level. After passing through the corresponding amplification units 201, said channels are distributed to homes through the headend output 203, by means of the output signal 204, at a substantially constant output level.

The distributor 100 of the invention is disposed in the headend 200 between the amplification units 201 and the headend input 202, receiving the input signal 20 that reaches said headend 200 through said headend input 202 and directing the channels of said input signal 20 to their corresponding amplification units 201.

Said distributor 100 comprises control means 2 shown in figure 2, preferably a microprocessor or a microcontroller, by means of which the level of said channels may be adjusted automatically before they are distributed to keep said levels substantially constant at all times, said channels therefore being capable of distributing said amplification units 201 at a substantially constant output level. In this way, the output levels of the channels are not affected by the variations in input levels that may be suffered by the channels in the headend input 202, as said variations may be compensated for. The distributor 100 also comprises a distributor output 30 for each channel to be distributed at a substantially constant output level, the control means 2 having the function of assigning a distributor output 30 to its corresponding channel. Each distributor output 30 comprises all the channels of the input signal 20, but only the assigned channel has a substantially constant output level. A distribution output 30 corresponds to each amplification unit 201, so that each amplification unit 201 only amplifies the corresponding channel corresponding to the corresponding distribution output 30. A user (generally the installation engineer of the headend 200 or the distributor 100) programmes the channels to be distributed to homes at a substantially constant output level, programming them, for example, by means of a keyboard 14 that is linked to said distributor 100 and which communicates with the control means 2, and programmes at the same time the distribution output 30 corresponding to each one of said channels. Said installation engineer may also set a reference level, that may be for example 68 dB/µV, to which the output levels of the programmed channels are adjusted, although said value may be set beforehand, to factory settings for example. The reference level, and the data referring to the selected channels and to the association between said channels and the distribution outputs 30 are stored in a memory 12 comprised in the distributor 100, the control means 2 being capable of accessing said memory 12 and assigning a distributor output 30 for each one of said selected channels, in accordance with the programming conducted by the installation engineer.

Each distributor 100 has a limited number of distributor outputs 30, which may be for example four, eight or sixteen, as a result of which if another distributor output 30 is needed because more channels are to be selected, said distributor 100 is adapted so that it may be connected in cascade to an additional distributor 100'. The distributor 100 comprises distribution means that enable the input signal 20 to be treated by the distributor 100 itself, and by at least one additional distributor 100', which may be linked in cascade to the distributor 100 and which receives the input signal 20 from said distributor 100. For this purpose, the distribution means comprise an input derivator 4 (commercial-type, for example) that may direct said input signal 20 towards the distributor outputs 30 on the one hand, and towards the additional distributor 100' on the other, thereby enabling said distributor 100' to receive the input signal 20. Due to its characteristics, the input derivator 4 attenuates the levels of the channels of said input signal 20, as a result of which the distribution means also comprise a gain amplifier 5 through which the input signal 20 passes, preferably before reaching said input derivator 4, the gain amplifier 5 providing a gain substantially equal to the loss (or attenuation) the levels of said channels suffer when passing through said input derivator 4, thereby enabling an input signal 20 with the same characteristics (the same channels with the same input levels) as the input signal 20 reaching the distributor 100 to reach the additional distributor 100'. When installing the distributors 100 and 100', for example, the installation engineer selects certain channels for the distributor 100 and other channels for the additional distributor 100'. Said additional distributor 100' is analogous to the distributor 100, as a result of which although only one additional distributor 100' is disclosed, it is clear that as many distributors 100, 100' as are necessary can be linked in cascade.

The distributor 100 comprises an outputs module 3 that comprises the distributor outputs 30, said outputs module 3 comprising an operating range defined between a predetermined upper limit and a predetermined lower limit, which may be for example 90 dB/µV and 60 dB/ µV, the levels of the channels to be distributed through said distributor outputs 30 necessarily having to be comprised within said operating range. Thus, after passing through the input derivator 4 the input signal 20 that is treated by the distributor 100 itself reaches a programmable range attenuator 6 in which the level of the channels comprised in said input signal 20 is attenuated for the purpose of keeping all the channels at levels within the operating range. Every time that the distributor 100 is switched on (restarted) the control means 2 are able to detect the level of each one of said programmed channels and act on the range attenuator 6 in order to set the attenuation of said range attenuator 6, said attenuation being stored each time in the memory 12 of the distributor 100. Said control means 2 determine which channel comprises the highest level and act on said range attenuator 6 so that the level of said channel is as close as possible to the upper limit of the operating range, inside said operating range, the levels of the other channels being attenuated in the same way. The control means 2 indicate said range attenuator 6 to attenuate as little as possible in the event that said control means 2 determine that the level of said channel is below the upper limit, or that it should attenuate at a certain level if said level is above said upper limit. There may be cases in which the level of said channel continues to exceed the upper limit even when attenuating as much as possible, or in which said level fails to exceed the lower limit even when attenuating as little as possible, cases in which the installation engineer is required to dispose an attenuator (not shown in the figures) or an amplifier (not shown in the figures) in the input of the headend 200, depending on the case, so that the outputs module 3 may treat said channels correctly. There may also be cases in which as a result of the attenuation of the range attenuator 6 the levels of some channels remain within the operating range while others do not, these latter channels being capable of being treated in an additional distributor 100', for example. Said range attenuator 6 is preferably voltage-controlled by the control means 2, a digital analogue converter 7 being disposed in order to convert the signal originating from said control means 2. The distributor 100 comprises luminous indicators (not shown in the figures) to indicate whether the level of the channels is within the operating range or not, the installation engineer being able to see said luminous indicators, for example LEDs, and to decide whether an attenuator (or an amplifier) should be disposed in the input of the headend 200, or if an additional distributor 100' should be disposed and specific channels programmed in said additional distributor 100'.

Once it has passed through the range attenuator 6, the input signal 20 reaches an intermediate derivator 9 for directing said input signal 20 towards the outputs module 3 on the one hand and towards the control means 2 on the other. Between the intermediate derivator 9 and said control means 2 are disposed selection means 10 that select, one by one, the channels programmed by the installation engineer in a sequential manner, so that the control means 2 may determine the level of each one of said channels in a sequential manner. Said selection means 10 are conventional and may comprise, for example, a conventional "tuner" 10a and a conventional "FOS" 10b, a digital analogue converter 11 so that the channels may be treated by said control means 2, and an adapter 15 for adapting the output of the "FOS" 10b to the input of the digital analogue converter 11. In this way, data proportional to the levels of each channel reach said control means 2 sequentially, by means of which the value of said levels may be determined.

The outputs module 3 also comprises a programmable output attenuator 31 associated to each distributor output 30, it being the installation engineer (or another type of user) who programmes the association when they programme the channels to be distributed. The control means 2 may access the memory 12 in order to obtain information on the programmed channels and the distributor output 30 that corresponds to each one of said channels, thereby being capable of acting on the corresponding output attenuators 31 in order to keep the output level of the channel corresponding to each distributor output 30 substantially constant, thereby adjusting the attenuation of the corresponding output attenuator 31. The control means 2 determine the input level of each one of the programmed channels and act on the output attenuators 31 associated to each one of the distributor outputs 30, adjusting the output level of each channel to the reference level stored in the memory 12 in order to keep it substantially constant regardless of the variations in the input level of the channels of the input signals 20. In said action, said distributor 100 comprises a digital analogue converter 13 that receives the digital signals from the control means 2 for said output attenuators 31 and converts them into analogue signals in order to adjust the attenuation level of said output attenuators 31. Said converter 13 comprises a plurality of analogue outputs, each one of them corresponding with an output attenuator 31, the control means 2 associating each one of said analogue outputs to an output attenuator 31.

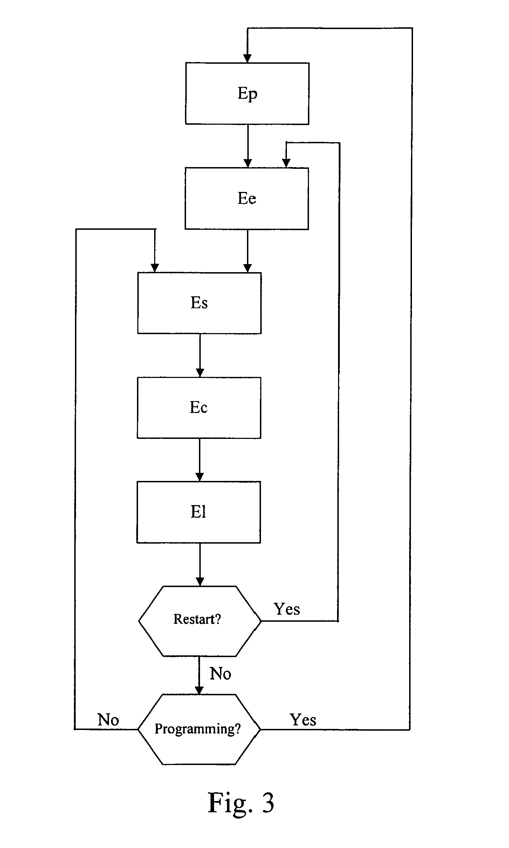

The invention also provides a procedure shown in figure 3 for the distribution of the input signal 20 through a distributor 100 of the TV headend 200. During the normal operating of the distributor 100, with said distributor running, the procedure of the invention comprises a selection step Es, a calculation step Ec and an output step E1 that are executed sequentially and cyclically. However, when said distributor 100 is installed, the procedure also comprises a programming step Ep and a scale step Ee preceding the cyclical selection Es, calculation Ec and output E1 steps. When the distributor 100 is restarted following a power cut, for example, the procedure comprises only the scale step Ee preceding said cyclical steps. The procedure is described in greater detail below. Although in figure 3 the questions of both the restart and the programming following the output step El are raised, it is clear that these may occur at any moment during the execution of the procedure, figure 3 acting as an illustration.

When an installation engineer (or user) installs a distributor 100 such as that of the invention, said installation engineer programmes the channels of the input signal 20 that are to be selected and the distributor output 30 that corresponds to each channel selected during the programming step Ep, preferably storing said data in the memory 12. Then, during the scale step Ee the control means 2 determine the channel with the input level that is the highest of all the channels selected by the installation engineer, the level of said channel being adjusted as close as possible to the upper limit of the operating range of the outputs module 3 and the other channels being adjusted in line with said first adjustment. In addition, in said scale step Ee, the data referring to the attenuation of the range attenuator 6, which corresponds with the value that said range attenuator 6 has to attenuate in order to obtain a level as close as possible to the upper limit in the corresponding channel, is stored in the memory 12. Following the scale step Ee, the procedure comprises the selection step Es during which the control means 2 select at least one of the channels of the input signal 20. Said control means 2 read the data entered in the memory 12 during the programming step Ep, selecting the channels programmed during said programming step Ep.

Following the selection step Es, the procedure comprises the calculation step Ec during which the control means 2 sequentially determine the level of the selected channels and calculate the adjustment that needs to be made in said levels in order to distribute said channels at a substantially constant output level equal to the reference level of the memory 12, through the distributor outputs 30. For this purpose, said control means 2 calculate the attenuation required for each one of the output attenuators 31 in accordance with the level determined. Subsequently, during the output step El, said control means 2 access the memory 12 and associate to each channel the distribution output 30 programmed during the programming step Ep, assigning the attenuation values calculated in the calculation step Ec to the output attenuator 31 corresponding to the distributor output 30 of the corresponding channel, so that said channel is distributed at a constant output level through said distributor output 30, equal to the reference level, each channel thereby being distributed through its corresponding distributor output 30 to the corresponding amplification unit 201. As long as the distributor continues to operate normally, without restarts, power cuts or any new programming, following the output step El, the selection step Es executes itself again and so on. The execution of these steps is also sequential, the selection Es, calculation Ec and output El steps occurring for one channel, then another and so on.

## Claims

1. Programmable active distributor for a TV headend, the headend (200) comprising
a headend input (202) that receives an input signal (20) that comprises a plurality of channels,
a headend output (203) to distribute to homes at least one of the channels of the input signal (20), at an adjusted output level, and
at least one channel amplification unit (201) that is disposed between the headend input (202) and the headend output (203) and which applies a gain to a channel in order to adjust its output level, the headend (200) comprising as many amplification units (201) as channels to be distributed at an adjusted output level and with each amplification unit (201) adjusting the output level of a corresponding channel,
**characterised in that** the distributor (100) is disposed between the headend input (202) and the channel amplification units (201), receiving the input signal (20) from the headend input (202) and comprising at least one distributor output (30) for distributing at least one of said channels to the channel amplification units (201),
the distributor (100) also comprising control means (2) that may select at least one of the channels of the input signal (20) received, which may determine the input level of said selected channels, and which may adjust the level of said selected channels in order to distribute them through the distributor outputs (30) at a substantially constant output level, the distributor (100) comprising a distributor output (30) for each selected channel and the control means (2) associating a selected channel to each distributor output (30), each distributor output (30) being linked to a channel amplification unit (201).

2. Distributor according to the preceding claim, which comprises an output attenuator (31) associated to each distributor output (30), the control means (2) being capable of acting on the corresponding output attenuator (31) in order to keep the output level of the channel associated to each distributor output (30) substantially constant.

3. Distributor according to the preceding claim, wherein the control means (2) sequentially receive data proportional to the level of the channels of the input signal (20) whose output level is to be kept constant, said control means (2) being capable of determining said levels by means of said data, and the distributor (100) comprising a memory (12) in which the association of each channel to its corresponding distributor output (30) and a reference level for the output levels of the distributor outputs (30) are stored, said control means (2) adjusting the attenuation of the output attenuator (31) corresponding to the distribution output (30) associated to the corresponding channel.

4. Distributor according to any of the preceding claims, which comprises a programmable range attenuator (6) and an outputs module (3) that comprises the distributor output (30), said outputs module (3) comprising a specific operating range between a predetermined upper limit and a predetermined lower limit and the control means (2) being capable of determining the level of each channel, so that said control means (2) act on said range attenuator (6) adjusting its attenuation, in order that the channel with the highest level comprises a new level within the specific operating range, as close as possible to an upper limit of said operating range.

5. Distributor according to the preceding claim, which comprises luminous indicators for indicating if the level of the channels is or is not within the predetermined operating range.

6. Distributor according to claims 4 or 5, which comprises an intermediate derivator (9) that receives the input signal (20) from the range attenuator (6), the intermediate derivator (9) being capable of directing said input signal (20) towards the outputs module (3) on the one hand and towards the control means (2) on the other.

7. Distributor according to any of the preceding claims, wherein each distributor output (30) comprises all the channels of the input signal (20), with only the channel associated to said distributor output (30) comprising a substantially constant output level.

8. Distributor according to any of the preceding claims, which comprises distribution means (4,5) for directing the input signal (20) towards the distributor output (3) on the one hand, and towards an additional distributor (100') on the other.

9. TV headend that comprises a distributor according to any of the preceding claims.

10. Procedure for the distribution of an input signal (20) in a distributor (100) of a TV headend (200), the headend (200) comprising,
a headend input (202) that may receive an input signal (20) that comprises a plurality of channels,
a headend output (203) for distributing to homes at least one of the channels at an adjusted output level, and
at least one channel amplification unit (201) that is disposed between the headend input (202) and the headend output (203),
**characterised in that** the distributor (100) is disposed between the headend input (202) and the amplification units (201), receiving the input signal (20) from the headend input (202) and comprising at least one distributor output (30) for transmitting at least one of said channels to the amplification units (201),
the procedure comprising
a selection step (Es) during which at least one of the channels of the input signal (20) is selected,
a calculation step (Ec) during which the level of the selected channels is determined and the adjustment to be made in said level in order to distribute said channels at a substantially constant output level is calculated, and
an output step (El) during which a distributor output (30) is associated to each selected channel and the level of each channel is adjusted in accordance with the calculation of the calculation step (Ec), each channel being distributed through the corresponding distributor output (30) to the corresponding amplification unit (201).

11. Procedure according to the preceding claim, wherein the distributor (100) comprises an output attenuator (31) for each distributor output (30), the attenuation required for the output attenuator (31) corresponding to a channel being calculated during the calculation step (Ec), and said output attenuator (31) being associated to the corresponding distributor output (30) during the output step (El), the required attenuation being assigned to said output attenuator (31) in said output step (El).

12. Procedure according to any of claims 10 or 11, wherein the level of the channels of the sequentially selected input signal (20) is determined during the calculation step (Ec), the level of each one of said channels being sequentially adjusted to a predetermined reference level.

13. Procedure according to any of claims 10 to 12, which comprises a scale step (Ee) in which the channel that comprises a higher input level between the selected channels is determined, and wherein the distributor (100) comprises a range attenuator (6), an attenuation value being assigned to the range attenuator (6), so that the level of said channel is as close as possible to a specific upper limit within a specific operating range, with said levels being subsequently adjusted to a substantially constant level in the calculation step (Ec).

14. Procedure according to any of claims 10 to 13, which comprises a programming step (Ep) during which the channels of the input signal (20) to be selected and the distributor output (30) that corresponds to each one of said channels are programmed.
